Europäisches Patentamt

European Patent Office

Office européen des brevets

(11) Publication number: **0 321 302 B1**

(12) **EUROPEAN PATENT SPECIFICATION**

(45) Date of publication of patent specification: **06.05.92**   (51) Int. Cl.⁵: **C10G 45/60**, B01J 23/40

(21) Application number: **88311983.6**

(22) Date of filing: **16.12.88**

(54) **Method for isomerizing wax to lube base oils using an isomerization catalyst.**

(30) Priority: **18.12.87 US 134952**

(43) Date of publication of application:
**21.06.89 Bulletin  89/25**

(45) Publication of the grant of the patent:
**06.05.92 Bulletin  92/19**

(84) Designated Contracting States:
**BE DE ES FR GB IT NL**

(56) References cited:
**BE-A- 627 517**
**US-A- 2 668 866**
**US-A- 4 612 293**

(73) Proprietor: **EXXON RESEARCH AND ENGI-
NEERING COMPANY**
**P.O.Box 390, 180 Park Avenue**
**Florham Park, New Jersey 07932(US)**

(72) Inventor: **Cody, Ian Alfred**
**2104 Huron Shores Drive Clearwater**
**Ontario N7T 7H6(CA)**
Inventor: **Hamner, Glen Porter**
**(Deceased)**
**(Deceased)(US)**
Inventor: **Schorfheide, James John**
**1534 Stoneleigh Drive**
**Baton Rouge Louisiana 70808(US)**

(74) Representative: **Somers, Harold Arnold et al
ESSO Engineering (Europe) Ltd. Patents &
Licences Mailpoint 72 Esso House Ermyn
Way
Leatherhead, Surrey KT22 8XE(GB)**

## Description

A process is disclosed of the production of high yields of non-conventional lube oil base stocks or blending stocks of very low pour point, pour point of about -21°C, preferably -24°C, most preferably -27°C and a very high viscosity index (VI), IV's of about 130, preferably 135 and higher by the isomerization of waxes over isomerization catalysts containing a hydro-genating metal component typically one or a mixture from Group VIII, preferably noble Group VIII, most preferably platinum on a fluorided alumina or material containing alumina support, wherein said catalyst in its (as introduced to waxy feed) form in characterized by possessing (1) a hydrate level of 60 or less, preferably between 10 to 60 determined as the relative amount of hydrate represented by a peak in the X-ray diffraction (XRD) pattern at $2\Theta$ = 5.66Å (0.566 nm) when a hydrate level of 100 corresponds to the XRD peak height exhibited by a standard material constituting 0.6 wt% Pt on 150 $m^2$/g $\gamma$ alumina containing 7.2 wt% F wherein the fluorine has been deposited using an aqueous solution containing a high concentration of HF, i.e. 10 wt% and greater, preferably 10 to 15 wt% HF and the material dried at 150°C for 16 hrs; (2) a surface nitrogen content N/Al ratio of about 0.01 or less, preferably 0.007 or less, more preferably 0.004 or less as determined by X-ray photo electron spectroscopy (XPS); (3) a bulk fluorine concentration of between from 2 to 10 wt%, preferably between 5 to 8 wt% and (4) a surface fluorine concentration defined as the amount of fluorine present in a layer between the surface of the catalyst particle to a depth of about 1/100 of an inch (0.254 mm) of less than about 3 wt%, preferably less than about 1 wt%, most preferably less than about 0.5 wt% provided that the surface fluoride concentration is less than the bulk fluoride concentration.

The fluoride content of the catalyst can be determined in a number of ways.

One technique analyzes the fluorided catalysts using oxygen combustion methodology which is well established in the literature. 8-10 mg of sample is mixed with 0.1 g benzoic acid and 1.2 g of mineral oil in a stainless steel combustion capsule which is mounted in a 300 mL. Parr oxygen combustion bomb. The "sample" is purged of air and subsequently combusted under 3.039 MPa (30 Atms) of pure oxygen. Combustion products are collected in 5 mL. of deionized water. Once the reaction has gone to completion (about 15 minutes), the absorbing solution is quantitatively transferred and made to fixed volume.

Fluoride concentration of the sample is determined by ion chromatography analysis of the combustion product solution. Calibration curves are prepared by combusting several concentrations of ethanolic KF standards (in the same manner as the sample) to obtain a 0-10 ppm calibration range. Fluoride concentration of the catalyst is calculated on an ignition-loss-free-basis by comparison of the sample solution response to that of the calibration curve. Ignition loss is determined on a separate sample heated to 800 degrees F (426.7°C) for at least 2 hours. Ion chromatographic analysis uses standard anion conditions.

Another procedure employs the use of fluoride distillation with a titrimetric finish. Fluorides are converted into fluorosilicic acid ($H_2SiF_6$) by reaction with quartz in phosphoric acid medium, and distilled as such using super heated steam. This is the Willard-Winter-Tananaev distillation. It should be noted that the use of super heated, dry (rather than wet) steam is crucial in obtaining accurate results. Using a wet steam generator yielded results 10-20% lower. The collected fluorosilicic acid is titrated with standardized sodium hydroxide solution. A correction has to be made for the phosphoric acid which is also transferred by the steam. Fluoride data are reported on an ignition-loss-free-basis after determination of ignition loss on a sample heated to 400 degree C for 1 hour.

The present invention is also directed to a wax isomerization process for producing high yields of non-conventional lube oil base stocks or blending stocks of low pour and high viscosity index which process employs a catalyst prepared by a process involving depositing a hydrogenation metal on an alumina or material containing alumina support, preferably alumina or material which is predominantly alumina (i.e. >50% alumina), calcining said metal loaded support typically at between 350 to 500°C, preferably 450 to 500°C for 1 to 5 hrs, preferably 1 to 3 hrs and fluoriding said metal loaded support by using either a high pH fluorine source solution, said solution being at a pH of 3.5 to 4.5, to a bulk fluorine level of about 8 wt% or less, (e.g., 2 to 8 wt%), preferably about 7 wt% or less followed by rapid drying in a thin bed or rotary kiln in air, an oxygen containing atmosphere or inert atmosphere to a temperature between 350 to 450°C in about 3 hours or less, preferably 375 to 400°C and holding, if necessary, at the final temperature for a time sufficient to reduce the hydrate content to the aforesaid level (e.g., 1 to 5 hours) or by using a low pH source solution having a pH of less than 3.5 using e.g. aqueous solution of HF or appropriate mixtures of HF and $NH_4F$ to fluoride the support to a bulk fluorine level of about 10 wt% or less, (e.g., 2 to 10 wt%), preferably about 8 wt% or less followed by drying in a thin bed or rotary kiln in air, an oxygen containing atmosphere, or an inert atmosphere to a temperature of 350 to 450°C, preferably 375 to 425°C. The material can be held at this final temperature for 1 to 5 hours if desired.

The support is preferably in the form of extrudates which are at least about 0.79375 mm (1/32 inch) across the longest cross-sectional dimension. Such extrudates can take the form of tri-lobes, rings, etc., preferably 1/32 to 1/4 inch (0.79375 to 6.35 mm) cylinders, most preferably 1/16 to 1/8 inch (1.588 to 3.175 mm) cylinders. The support is preferably alumina or material consisting predominantly (i.e. >50%) of alumina, the alumina preferably being gamma or eta alumina. Typically useful aluminas have surface areas in the range of 10 to 250 m$^2$/g, preferably 100 to 250 m$^2$/g.

The catalyst typically contains from 0.1 to 5.0 weight percent metal, preferably 0.1 to 1.0 weight percent metal, most preferably 0.2 to 0.6 weight percent metal.

As previously stated, catalysts useful in the present process have been made by fluoriding the metal-loaded support using a high pH solution. The fluorine source solution has a pH of 3.5 to 4.5, and preferably is a solution consisting of HF in combination with $NH_4F$, the amount of ammonium fluoride used being such that the resulting solution has a pH in the above-recited range.

Following deposition of the metal and the fluorine on the support, the catalyst is dried and heated in an air or oxygen containing atmosphere or inert atmosphere to achieve the desired hydrate level. This heating is also responsible for reducing the nitrogen content of the catalyst to the desired level. Heating of the catalyst made using the $NH_4F$/HF source solution is preferably practiced in a thin bed or rotary kiln to insure rapid (i.e. 3 hours or less) thorough even heating to a temperature in the range 350 to 450°C, preferably 375 to 400°C, and holding, if necessary, at the final temperature for a time sufficient to reduce the hydrate and nitrogen contents to the aforesaid levels (e.g. about 1.5 hours). To facilitate removal of nitrogen, it is preferred that the drying/heating be performed in a flowing air, or an oxygen atmosphere or an inert atmosphere preferably in a rotary kiln.

The catalyst has a surface nitrogen content of about 0.01 or less N/Al by x-ray photoelectron spectroscopy (XPS), preferably about 0.007 N/Al or less N/Al, most preferably about 0.004 N/Al or less (by XPS).

Alternatively, the metal-loaded support is fluorided using low pH solutions, pH less than 3.5 using aqueous HF or appropriate mixtures of HF and $NH_4F$, followed by heating in air or oxygen containing atmosphere or hydrogen or an inert atmosphere at a temperature of 350 to 450°C, preferably 375 to 425°C. The material can be held at this temperature for from 1 to 5 hours if desired.

If the low pH prepared catalyst is first charged to a unit, the catalyst must be held at the final activation temperature for longer than 5 hours, preferably longer than 10 hours and preferably at temperatures of 400 to 450°C.

The catalyst following the above recited heating can be charged to the isomerization reactor and brought quickly up to operating conditions in a flow of hydrogen. Alternatively the catalyst following the recited heating can be activated preferably in pure or plant hydrogen (60 to 70 vol% $H_2$). When activating a catalyst prepared using the high pH solution technique care must be taken to employ short activation times, from 1 to 24 hours, preferably 2 to 10 hours being sufficient at temperatures of 350 to 450°C. Catalysts made using the low pH solution technique can be activated in hydrogen at 350 to 500°C for from 1 to 48 hours or longer. If low pH prepared catalysts are not heated first then it is preferred that they be subsequently activated at more severe conditions, i.e. for longer times and/or higher temperatures. On the other hand, if they are heated first then moderate activation procedures can be employed, similar to those used for the higher pH solution treatment catalysts.

A typical hydrogen activation profile shows a period of 2 hours to go from room temperature to 100°C with the catalyst being held at 100°C for 0 to 2 hours, then the temperature is raised from 100°C to about 350°C to 450°C over a period of 1 to 3 hours with a hold at the final temperature of from 1 to 4 hours. Alternatively, the catalyst can be activated by heating from room temperature to the final temperature of 350 to 450°C over a period of 2 to 7 hours with a hold at the final temperature of 0 to 4 hours. Similarly, activation can be accomplished by going from room temperature to the final temperature of 350 to 450°C in 1 hour.

The wax feed may come from any of a number of sources, including waxes recovered from the solvent or autorefrigerative dewaxing of conventional hydrocarbon oils, as well as mixtures of these waxes from different gas oil or deasphalted residue fractions. Waxes from dewaxing conventional hydrocarbon oils are commonly called slack waxes and usually contain an appreciable amount of oil. The oil content of these slack waxes can range anywhere from 0 to 45 percent or more, usually 5 to 30 percent oil. For the purposes of this application, the waxes are divided into two categories: (1) light paraffinic waxes boiling in the range 300 to 580°C; and (2) heavy microwaxes having a substantial fraction (>50 percent) boiling above 600°C.

3

As one would expect, isomerization catalysts are extremely susceptible to deactivation by the presence of heteroatom compounds (i.e., N or S compounds) in the wax feed, so care must be exercised to remove such heteroatom materials from the wax feed charges. Waxes obtained from natural petroleum sources contain appreciable quantities of oil which contain heteroatom compounds. In such instances, the slack waxes should be hydrotreated to reduce the level of heteroatoms to levels commonly accepted in the industry as tolerable for feeds to be exposed to isomerization catalysts. Such levels will typically be a nitrogen content of <1 to 5 ppm and a sulfur content of <1 to 20 ppm, preferably 2 ppm or less nitrogen, and <1 to 2 ppm sulfur. Similarly, slack waxes from the heavier feeds should be deoiled prior to hydrotreating to an oil content in the range of 5 to 35 percent oil, preferably 5 to 25 percent oil. The hydrotreating step will employ typical hydrotreating catalyst such as Co/Mo, Ni/Mo or Co Ni Mo on alumina under standard, commercially accepted conditions, e.g. temperature of 280 to 400°C, space velocity of 0.1 to 2.0 V/V/hr, pressure of from 500 to 3,000 psig (3.448 to 20.685 MPa) $H_2$ and hydrogen gas rates of from 500 to 5,000 SCF/B (0.089 to 0.89 $m^3$ $H_2$/liter feed).

Isomerization is conducted under conditions of temperatures between about 270 to 400°C, preferably 300 to 360°C, pressures of 500 to 3,000 psi (3.448 to 20.685 MPa) $H_2$, preferably 1,000 to 1,500 psi (6.895 to 10.343 MPa) $H_2$, hydrogen gas rates of 1,000 to 10,000 SCF/bbl (0.178 to 1.78 $m^3$ $H_2$/liter feed), and a space velocity in the range of 0.1 to 10 V/V/hr, preferably 1 to 2 V/V/hr.

It is preferred that the isomerization reaction be conducted to a level of conversion such that about 40 or less %, preferably 15 to 35%, most preferably 20 to 30%, unconverted wax remains in the fraction of the isomerizate sent to the dewaxing unit calculated as (unconverted wax)/(unconverted wax + dewaxed oil). The amount of unconverted wax in the 370°C$^+$ oil fraction is taken to be the amount of wax removed or recovered from said oil fraction upon dewaxing. The total product from the isomerization (isom) unit is fractionated into a lube oil fraction boiling in the 330°C$^+$ range, preferably in the 370°C$^+$ range. This lube oil fraction is solvent dewaxed, preferably using 20/80 v/v mixture of MEK/MIBK solvent, and (unconverted) wax is recycled to the isomerization unit.

Operating the isomerization unit at a level of conversion such that the oil fraction sent to the dewaxer contains about 40 percent or less wax, preferably 15 to 35 percent wax, most preferably 20 to 30 percent unconverted wax, goes against the conventional wisdom of isomerization operations. Lower levels of conversion, i.e. those levels at which a substantial portion of wax remains unconverted in the lube oil fraction sent to the dewaxer (and is subsequently recovered at the dewaxer for recycle), are typically seen as favoring maximization of lube oil production since operation at lower levels of conversion tend to favor the production of lube oil as compared to lower boiling fuels. The amount of wax present in the oil sent to the dewaxer normally should have no significant impact on the dewaxability of the oil or the pour point which can be achieved. While there may be a point beyond which so much wax is present as to be beyond the ability of the dewaxer to handle the volume of waxy oil, this traditionally is a materials-handling problem and does not affect the ability of the dewaxer to dewax oil to the desired pour point using conventional dewaxing techniques and temperatures. High levels of wax conversion, however, tend to produce larger quantities of fuels.

Following isomerization the isomerate is fractionated into a lubes cut and fuels cut, the lubes cut being identified as that fraction boiling in the 330°C$^+$ range, preferably the 370°C$^+$ range. This lubes fraction is then dewaxed to a pour point of about -21°C or lower. Dewaxing is accomplished by techniques which permit the recovery of unconverted wax, since in the process of the present invention this unconverted wax is recycled to the isomerization unit. It is preferred that this recycle wax be recycled to the main wax reservoir and be passed through the hydrotreating unit to remove any low quantities of entrained dewaxing solvent, which solvent could be detrimental to the isomerization catalyst. Alternatively, a separate stripper can be used to remove entrained dewaxing solvent or other contaminants. In either case the unconverted wax is recycled to the isomerization reactor. Solvent dewaxing is utilized and employs typical dewaxing solvents such as $C_3$ to $C_6$ ketones (e.g. methyl ethyl ketone, methyl isobutyl ketone and mixtures thereof), aromatic hydrocarbons (e.g. toluene), mixtures of ketones and aromatics (e.g. MEK/toluene) liquid, normally gaseous autorefrigerative hydrocarbons such as $C_3$-$C_4$ (i.e. propane, butane, mixtures thereof etc.), etc. at filter temperatures of -25 to -30°C.

The preferred solvent to dewax the isomerate under miscible conditions is a mixture of MEK/MIBK (20/80) used at a temperature in the range - 25 to -30°C. Further, when dewaxing isomerate made from a microwax, e.g. Bright Stock slack wax, it has been found to be preferred that the fraction of the isomerate which is dewaxed is the "broad heart cut" identified as the fraction boiling between 300 to 600°C, preferably 370 to 600°C. The heavy bottoms fraction (600°C$^+$) contains appreciable wax so they can also be recycled to the isomerization unit.

One desiring to maximize the production of lube oil having a viscosity in the 5.6 to 5.9 cSt/100°C range should practice the isomerization process under low hydrogen treat gas rate conditions, treat gas rates on the order of 500 to 5000 SCF/bbl, $H_2$, (0.089 to 0.89 $m^3$ $H_2$/liter feed preferably 2000 to 4000 SCF/bbl, $H_2$, (0.356 to 0.712 $m^3$ $H_2$/liter feed) most preferably 2000 to 3000 SCF/bbl, $H_2$ (0.356 to 0.534 $m^3$ $H_2$/liter feed).

It has also been found that prior to fractionation of the isomerate into various cuts and dewaxing said cuts the total liquid product (TLP) from the isomerization unit can be advantageously treated in a second stage at mild conditions using the isomerization catalyst or simply noble Group VIII or alumina catalyst to reduce PNA and other contaminants in the isomerate and thus yield an oil of improved daylight stability.

In that embodiment the total isomerate is passed over a charge of the isomerization catalyst or over just a noble Group VIII metal on alumina catalyst. Mild conditions are used, e.g. a temperature in the range of 170 to 270°C, preferably 180 to 220°C, at pressures of 300 to 1,500 psi $H_2$ (2.07 to 10.34 MPa), preferably 500 to 1,000 psi $H_2$ (3.45 to 6.89 MPa $H_2$), a hydrogen gas rate of 500 to 10,000 SCF/bbl (0.089 to 1.78 $m^3$ $H_2$/liter feed), preferably 1,000 to 5,000 SCF/bbl (0.178 to 0.89 $m^3$ $H_2$/liter feed) and a flow velocity of 0.25 to 10 V/V/hr, preferably 1 to 4 V/V/hr. Higher temperatures may be employed if pressures in excess of 1,500 psi (10.34 MPa) are used, but such high pressures may not be practical.

The total isomerate can be treated under these mild conditions in a separate, dedicated unit or the TLP from the isomerization reactor can be stored in tankage and subsequently passed through the aforementioned isomerization reactor under said mild conditions. It has been found to be unnecessary to fractionate the first stage product prior to this mild second stage treatment. Subjecting the whole product to this mild second stage treatment produces an oil product which upon subsequent fractionation and dewaxing yields a base oil exhibiting a high level of daylight stability and oxidation stability.

The invention wll be better understood by reference to the following examples which either demonstrate the invention or are offered for comparison purposes.

EXAMPLES

Example 1

In the following runs the isomerate was made from slack wax obtained by solvent dewaxing a 600N oil. The slack wax was hydrotreated over two commercial catalyst: HDN-30 catalyst at 350°C, 1.0 V/V/hr, 1,500 SCF/bbl, $H_2$ (0.267 $m^3$ $H_2$/liter feed), 1,000 psi (6.895 MPa) $H_2$ and over KF-840 at 340°C, 0.5 V/V/hr, 1,000 psi (6.895 MPa) 1,500 SCF/bbl (0.267 $m^3$ $H_2$/liter feed), yielding 98 percent hydroprocessed wax. These hydrotreated waxes had oil contents ranging from 21 to 23 percent, sulfur ranging from 3 to 10 (ppm), and nitrogen of $\leq$ 1 (ppm).

A blend of the hydrotreated wax feed was contacted with platium on fluorided alumina catalysts produced in the following way:

Catalyst 1

One sixteenth inch (1.5375 mm) calcined platinum $\gamma$-alumina extrudates were obtained from the commercial supplier containing 0.6 weight percent platinum and 1 percent chlorine. The metal loaded extrudate was then fluorided using 5:1 volume excess of 10 percent aqueous HF by immersion for 16 hours at ambient temperature (~25°C). The resulting material when washed with 2-fold excess $H_2O$ and dried at about 120°C in vacuum for 16 hours was designated Catalyst 1. The fluoride content was 7.2 weight percent. Catalyst 1 was activated at atmospheric pressure in $H_2$ as follows: heating from room temperature to 343°C in 4 hours, hold at 343°C for 2 hour.

Catalyst 2

This catalyst was prepared using 1.5375 mm (1/16 inch) calcined platinum-$\gamma$ alumina extrudates obtained from a commerical supplier. The extrudates contained 0.6 wt% platinum and 1% chlorine. The metal loaded extrudate was fluorided using 5:1 volume excess of 11.6 wt% aqueous HF by immersion for 16 hrs at about 25°C. The resulting material was washed with a 2 fold excess $H_2O$ and dried at about 120°C in vacuum for 16 hrs after which it was heated at 400°C in air for 3 hours. The heated material, Catalyst 2 was charged to a small pilot unit and activated in atmospheric pressure $H_2$ by heating from room temperature to 343°C in 4 hrs, and holding at 343°C for 2 hrs.

### Table I

| Catalyst | 1 | 2 |
|---|---|---|
| **Catalyst Property** | | |
| N/Al by XPS* | 0.0012 | 0.0013 |
| Hydrate Level* | 66 | 57 |
| Cat Charge ($cm^3$) | 50 | 50 |
| F wt% (bulk) | 7.2 | 7.2 |
| F wt% (surface) | 0.43 | ** |
| **Isom Conditions** | | |
| Temperature, °C | 313 | 315 |
| Pressure (psi) [MPa] $H_2$ | (1,000) 6.895 | (995) 6.861 |
| LHSV (v/v/h) | 0.45 | 0.45 |
| Gas Rate (SCF/bbl, $H_2$) [$m^3 H_2 \cdot liter^{-1} feed$] | (5,000) 0.29 | (5,000) a.89 |
| Max 370°C$^+$ oil yield (wt.% on feed) | 47.1 | 51.7 |
| 370°C– conversion (wt.% on feed) | 36.1 | 18.7 |

*after activation

**It is believed that the surface fluorine content of catalyst 2 is the same as for catalyst 1 as it has been found that heating in air normally has little effect on surface fluorine levels provided the catalyst was fluorided at low pH (<4).

The only difference between catalyst 1 and catalyst 2 was that catalyst 2 had been heated in air at 400°C for 1 hr. This treatment resulted in a reduction of the hydrate level to about 60. Catalyst 1 possessed a hydrate level in excess of 60. As can be seen in Table 1 catalyst 2 produced a higher yield of oil boiling in the 370°C+ range as compared to the yield obtained using catalyst 1.

Example 2

In this Example the hydrotreated 600N slack wax feed is that previously described in Example 1. Following isomerization in an upflow once-through mode of operation, the isomerate was fractionated into a 370°C$^+$ (lube fraction).

Dewaxed oil yields were determined using the ASTM Test D-3235 on the 370°C$^+$ fraction. The results shown in Table II illustrate that the $NH_4F$/HF treated catalysts exhibit good dewaxed oil yields provided surface fluorine is low, the hydrogen activation procedure is not protracted and the hydrate levels are within the previously recited desirable range.

A series of catalysts was prepared using $NH_4F/HF$ by soaking commercial 1/16 inch (1.5375 mm) calcined alumina extrudates containing 0.6 weight percent platinum and about 1.0 percent chlorine with a solution of $NH_4F/HF$ having a pH of about 4. The soaked material was washed, then dried and heated (as indicated in Table II). Fluorine content (bulk and surface), surface nitrogen to aluminum ratio (N/Al by XPS), hydrate level and activation procedures are as given in the Table II. Only Catalysts 3 and 4 which have low surface fluorine concentrations (i.e. <2% fluorine at the surface of the formed particle) are found to be adequately selective. Each of the comparison catalysts have high surface fluorine levels. Comparison Catalyst 3 which was activated over a very long period of time, and which was judged initially (before charging to the unit) to be within the scope of the invention subsequently did not exhibit good selectivity.

We believe the severe activation conditions to be responsible for subsequently increasing the surface fluorine level thereby impairing selectivity.

## Table II

| | 3 | 4 | Comparison 1 | Comparison 2 | Comparison 3 | Comparison 4 |
|---|---|---|---|---|---|---|
| Catalyst $c_m^3$ | | | | | | |
| Charge (cc) | 200 | 200 | 200 | 200 | 200 | 200 |
| Fluoride Source Solution | $NH_4F/HF$ | $NH_4F/HF$ | $NH_4F/HF$ | $NH_4F/HF$ (trilobe) | $NH_4F/HF$ | $NH_4F/HF$ |
| Drying/heating conditions, °C(in air) | 400 (muffle) | 400 (rotary kiln) | 400 (rotary kiln) | 400 (muffle) | 400 (rotary kiln) | 400 (muffle) |
| **Inspection on Dried/heated catalyst** | | | | | | |
| N/Al by XPS | 0.0037 | 0.0021 | 0.010 | 0.013 | 0.0021 | 0.0040 |
| F, wt% (bulk) | 7.0 | 7.0 | 6.8 | 5.6 | 7.0 | 6.9 |
| F,wt%(surface) | 1.7 | 2.0 | ∼10 | ∼5 | *– | 7 |
| Hydrate Level (after drying/heating) | 29 | 24 | 39 | <10 | 24 | <10 |
| **Hydrogen Activation** | | | | | | |
| **Activation Times, hrs** | | | | | | |
| Rt to 100°C, at 100°C | 2, 1 | – | 2, 1 | 2, 1 | 3, 6 | 2, 1 |
| To Final Temp. (T) | 3 | 7(2) | 2 | 2 | 42 | 2 |
| Time at T | 4 | 2 | 1 | 1 | 3 | 1 |
| Final T, °C | 450 | 350 | 350 | 350 | 400 | 350 |
| Activation Pressure, (psi)kPa $H_2$ | (50)345 | (50)345 | (50)345 | (50)345 | (300)2069 | (50)345 |
| **Isom Conditions** | | | | | | |
| Temp., °C | 340 | 309 | 310 | 300 | 305 | 310 |
| LHSV (v/v/h) MPa | 0.90 | 1.0 | 0.90 | 0.90 | 1.0 | 0.90 |
| Pressure, (psi)/H₂ m³H₂/liter | (1,000)6.895 | (1,000)6.895 | (1,000)6.895 | (1,000)6.895 | (1,000)6.895 | (1,000)6.895 |
| Gas Rate (SCF/b, H₂) | (5,000)0.89 | (5,000)0.89 | (5,000)0.89 | (5,000)0.89 | (5,000)0.89 | (5,000)0.89 |
| Dewaxed oil yield, 370°C+ (wt% on feed)(1) | 50.0 | 49.3 | 44.0 | 45.0 | 45.0 | 48.5 |
| 370°C-,conversion (wt% on feed) | 23.8 | 35.2 | 26.1 | 24.1 | 21.8 | 30.1 |
| Unconverted wax (wt% on feed) | 26.2 | 15.5 | 29.6 | 30.9 | 33.2 | 21.4 |

(1) Oil yields reported by ASTM D-3235 method.
(2) Rt to 350°C in 7 hours.
* Fluorine at surface measured to be 2.0 before activation and approximately 7 after activation.

**Claims**

1. A method for producing lube oil base stocks or blending stocks from waxy feed comprising the step of contacting the feed with a wax-isomerization catalyst under isomerization conditions, wherein the said catalyst comprises a hydrogenation metal-loaded fluorided alumina or material containing-alumina catalyst and which catalyst, as introduced to waxy feed, is characterized by possessing (1) a hydrate level of 60 or less as determined as the relative amount of hydrate represented by a peak in the X-ray diffraction (XRD) pattern at $2\Theta = 5.66\text{\AA}$ (0.566 nm) when a hydrate level of 100 corresponds to the $2\Theta = 5.66\text{\AA}$ (0.566 nm) peak height exhibited in the XRD by a standard material constituting 0.6 wt% Pt on 150 $m^2$/g gamma-alumina containing 7.2 wt% fluorine wherein the fluorine has been deposited using an aqueous solution containing a high concentration of HF and the material dried at 150°C for 16 hours; (2) a surface nitrogen content N/Al ratio of 0.01 or less as determined by X-ray photo electron spectroscopy; (3) a bulk fluorine concentration of between from 2 to 10 wt% and (4) a surface fluorine concentration defined as the amount of fluorine present in a layer between the surface of the catalyst to a depth of about 1/100 inch (0.254 mm) of less than about 3 wt% provided that the surface fluoride concentration is less than the bulk fluoride concentration.

2. The method of claim 1 wherein the catalyst possesses a hydrate level of from between 10 to 60.

3. The method of claim 1 or claim 2 wherein the catalyst possesses a surface nitrogen content N/Al ratio of 0.007 or less.

4. The method of any one of claims 1 to 3 wherein the catalyst possesses a surface fluorine content of less than about 1 wt%, e.g., less than 0.5 wt%.

5. A method as in claims 1 to 4 wherein the said catalyst is made by a process involving depositing the hydrogenation metal on an alumina-containing support, calcining said metal-loaded support, fluoriding said metal-loaded support using a fluorine source solution at a pH of from 3.5 to 4.5 to a bulk fluorine level of about 8 wt% or less, and drying/heating said fluorided metal-loaded support at a temperature between from 350 to 450°C in air, an oxygen-containing atmosphere, or an inert atmosphere in about 3 hours or less.

6. The method of claim 4 wherein the fluorine source solution is an aqueous solution of $NH_4 F$/HF.

7. A method as in claims 1 to 4 wherein the said catalyst is made by a process involving depositing the hydrogenation metal on an alumina-containing support, calcining said metal-loaded support, fluoriding said metal-loaded support using a fluorine source solution having a pH of less than 3.5 to a bulk fluorine level of about 10 wt% or less and drying/heating said fluorided metal-loaded support at a temperature between from 350 to 450°C in air, an oxygen-containing atmosphere, hydrogen or an inert atmosphere.

8. The method of claim 7 wherein the fluorine source solution is an aqueous solution of HF.

9. The method of claim 7 or claim 8 wherein the fluorided metal-loaded support is dried/heated at a temperature between from 375 to 425°C.

10. The method of any one of claims 1 to 9 wherein the alumina-containing support is, or comprises, gamma-alumina.

**Revendications**

1. Un procédé de fabrication d'huiles de base ou de mélanges pour lubrifiants à partir d'une charge paraffinique comprenant l'étape de mise en contact de la charge avec un catalyseur d'isomérisation de cires dans des conditions d'isomérisation, procédé dans lequel ledit catalyseur comprend un catalyseur à base d'alumine fluorée ou d'une matière contenant de l'alumine fluorée chargée d'un métal d'hydrogénation et lequel catalyseur, introduit dans la charge paraffinique, est caractérisé en ce qu'il possède (1) une teneur en hydrate de 60 ou moins, définie comme la quantité relative d'hydrate représentée par un pic du diagramme de diffraction des rayons X (XRD) à $2\Theta = 5,66\text{\AA}$ (0,566 nm)

lorsqu'une teneur en hydrate de 100 correspond à la hauteur de pic en XRD a $2\Theta$ = 5,66Å (0,566 nm) d'une substance étalon comportant 0,6% en poids de Pt sur de l'alumine gamma à 150 m$^2$/g contenant 7,2% en poids de fluor où le fluor a été déposé au moyen d'une solution aqueuse contenant une forte concentration d'HF et la substance a été séchée pendant 16 heures à 150°C ; (2) un rapport de la teneur superficielle en azote N/Al de 0,01 ou moins tel que déterminé par spectroscopie de photoélectrons X ; (3) une concentration globale de fluor entre 2 et 10% en poids et (4) une concentration superficielle de fluor définie comme la quantité de fluor présente dans une couche entre la surface du catalyseur et une profondeur d'environ 1/100e de pouce (0,254 nm), inférieure à environ 3% en poids, sous réserve que la concentration superficielle de fluorure soit inférieure à la concentration globale de fluorure.

2. Procédé selon la revendication 1 dans lequel le catalyseur possède une teneur en hydrate de 10 à 60.

3. Procédé selon la revendication 1 ou la revendication 2 dans lequel le catalyseur possède un rapport de la teneur superficielle en azote N/Al de 0,007 ou moins.

4. Procédé selon l'une quelconque des revendications 1 à 3 dans lequel le catalyseur possède une teneur superficielle en fluor inférieure à environ 1% en poids, par ex. inférieure à 0,5% en poids.

5. Procédé selon les revendications 1 à 4 dans lequel ledit catalyseur est produit par un procédé consistant à déposer le métal d'hydrogénation sur un support contenant de l'alumine, à calciner ledit support chargé de métal, à fluorer ledit support chargé de métal à l'aide d'une solution de source de fluor à un pH de 3,5 à 4,5 jusqu'à une teneur globale en fluor d'environ 8% en poids ou moins et à sécher/chauffer ledit support chargé de métal fluoré à une température entre 350 et 450°C pendant environ 3 heures ou moins à l'air, dans une atmosphère contenant de l'oxygène ou dans une atmosphère inerte.

6. Procédé selon la revendication 4 dans lequel la solution de source de fluor est une solution aqueuse de NH$_4$F/HF.

7. Procédé selon les revendications 1 à 4 dans lequel ledit catalyseur est produit par un procédé consistant à déposer le métal d'hydrogénation sur un support contenant de l'alumine, à calciner ledit support chargé de métal, à fluorer ledit support chargé de métal à l'aide d'une solution de source de fluor à un pH inférieur à 3,5 jusqu'à une teneur globale en fluor d'environ 10% en poids ou moins et à sécher/chauffer ledit support chargé de métal fluoré à une température entre 350 et 450°C à l'air, dans une atmosphère contenant de l'oxygène, dans une atmosphère d'hydrogène ou dans une atmosphère inerte.

8. Procédé selon la revendication 7 dans lequel la solution de source de fluor est une solution aqueuse d'HF.

9. Procédé selon la revendication 7 ou la revendication 8 dans lequel le support chargé de métal fluoré est séché/chauffé à une température entre 375 et 425°C.

10. Procédé selon l'une quelconque des revendications 1 à 9 dans lequel le support contenant de l'alumine est ou comprend de l'alumine gamma.


**Patentansprüche**

1. Verfahren zur Herstellung von Schmierölbasiseinsatzmaterialien oder -mischungseinsatzmaterialien aus paraffinhaltigem Einsatzmaterial, bei dem das Einsatzmaterial unter Isomerisierungsbedingungen mit einem Paraffinisomerisierungskatalysator kontaktiert wird, der einen mit Hydriermetall beladenes, fluoriertes Aluminiumoxid oder Aluminiumoxid umfassendes Material enthaltenden Katalysator umfaßt, der, so wie er dem paraffinhaltigen Einsatzmaterial zugeführt wird, dadurch gekennzeichnet ist, daß er (1) ein Hydratniveau von 60 oder weniger, wie bestimmt als die relative Hydratmenge, welche durch einen Peak im Röntgenbeugungsdiagramm (XRD) bei $2\Theta$ = 0,566 nm (5,66 Å) repräsentiert ist, wobei ein Hydratniveau von 100 der $2\Theta$ = 0,566 nm (5,66 Å) Peakhöhe entspricht, die das XRD eines Standardmaterials aufweist, das aus 0,6 Gew.% Pt auf y-Aluminiumoxid mit einer Oberfläche von 150

m$^2$/g, welches 7,2 Gew.% Fluor enthält, besteht, wobei das Fluor darauf abgeschieden worden ist, indem eine eine hohe Konzentration HF enthaltende wäßrige Lösung verwendet und das Material 16 Stunden lang bei 150°C getrocknet worden ist, (2) einen mittels Röntgenphotoelektronenspektroskopie bestimmten Oberflächenstickstoffgehalt - N/Al-Verhältnis - von 0,01 oder weniger, (3) eine Fluorgesamtkonzentration von 2 bis 10 Gew.% und (4) eine Oberflächenfluorkonzentration, die als Fluormenge definiert ist, welche in einer Schicht von der Oberfläche des Katalysators bis zu einer Tiefe von etwa 0,254 mm (1/100 inch) vorhanden ist, von weniger als etwa 3 Gew.% besitzt, vorausgesetzt, daß die Oberflächenfluoridkonzentration kleiner als die Gesamtfluoridkonzentration ist.

2.  Verfahren nach Anspruch 1, bei dem der Katalysator ein Hydratniveau von 10 bis 60 besitzt.

3.  Verfahren nach Anspruch 1 oder Anspruch 2, bei dem der Katalysator einen Oberflächenstickstoffgehalt - N/Al-Verhältnis - von 0,007 oder weniger besitzt.

4.  Verfahren nach einem der Ansprüche 1 bis 3, bei dem der Katalysator einen Oberflächenfluorgehalt von weniger als etwa 1 Gew.%, z.B. weniger als etwa 0,5 Gew.% besitzt.

5.  Verfahren nach einem der Ansprüche 1 bis 4, bei dem der Katalysator nach einem Verfahren hergestellt worden ist, bei dem das Hydriermetall auf einem Aluminiumoxid enthaltenden Träger abgeschieden, der mit Metall beladene Träger calciniert, der mit Metall beladene Träger unter Verwendung einer eine Fluorquelle enthaltenden Lösung bei einem pH-Wert von 3,5 bis 4,5 bis zu einem Gesamtfluorniveau von etwa 8 Gew.% oder weniger fluoriert und der fluorierte, mit Metall beladene Träger bei einer Temperatur von 350 bis 450°C in Luft, einer Sauerstoff enthaltenden Atmosphäre oder einer inerten Atmosphäre etwa 3 Stunden lang oder weniger getrocknet/erhitzt worden ist.

6.  Verfahren nach Anspruch 4, bei dem die eine Fluorquelle enthaltende Lösung eine wäßrige Lösung von NH$_4$F/HF ist.

7.  Verfahren nach einem der Ansprüche 1 bis 4, bei dem der Katalysator nach einem Verfahren hergestellt worden ist, bei dem das Hydriermetall auf einem Aluminiumoxid enthaltenden Träger abgeschieden, der mit Metall beladene Träger calciniert, der mit Metall beladene Träger unter Verwendung einer eine Fluorquelle enthaltenden Lösung mit einem pH=Wert von weniger als 3,5 bis zu einem Gesamtfluorniveau von etwa 10 Gew.% oder weniger fluoriert und der fluorierte, mit Metall beladene Träger bei einer Temperatur von 350 bis 450°C in Luft, einer Sauerstoff enthaltenden Atmosphäre, Wasserstoff oder einer inerten Atmosphäre getrocknet/erhitzt worden ist.

8.  Verfahren nach Anspruch 7, bei dem die eine Fluorquelle enthaltende Lösung eine wäßrige Lösung von HF ist.

9.  Verfahren nach Anspruch 7 oder Anspruch 8, bei dem der fluorierte, mit Metall beladene Träger bei einer Temperatur von 375 bis 425°C getrocknet/erhitzt worden ist.

10. Verfahren nach einem der Ansprüche 1 bis 9, bei dem der Aluminiumoxid enthaltende Träger $\gamma$-Aluminiumoxid ist oder dieses umfaßt.